# EUROPÄISCHE PATENTSCHRIFT

(11) **EP 1 424 580 B1**
(45) Veröffentlichungstag und Bekanntmachung des Hinweises auf die Patenterteilung: **15.12.2010**
(21) Anmeldenummer: 03103794.8
(22) Anmeldetag: 14.10.2003
(51) Int. Cl.: G02B 21/08, G02B 21/12

(54) **Durchlichtbeleuchtungseinrichtung für ein Mikroskop**
Transillumination device for a microscope
Dispositif pour l'éclairage par transmission pour un microscope

(30) Priorität: 29.11.2002 DE 10256149
(43) Veröffentlichungstag der Anmeldung: 02.06.2004
(73) Patentinhaber: Leica Microsystems CMS GmbH, 35578 Wetzlar (DE)
(72) Erfinder: Krüger, Ralf, 35510, Butzbach/Griedel (DE); Euteneuer, Peter, 35633, Lahnau (DE)
(74) Vertreter: Reichert, Werner Franz

(56) Entgegenhaltungen:
- AT-B- 167 069
- US-A- 3 679 287
- US-A- 3 833 282
- US-A- 4 163 150
- US-A- 4 363 532

## Beschreibung

Die vorliegende Erfindung betrifft eine Mikroskop-Durchlichtbeleuchtungseinrichtung mit einem Beleuchtungsstrahlengang, in dem das von einer Lichtquelle erzeugte Beleuchtungslicht durch eine Kollektorlinse, eine Leuchtfeldblende und eine Aperturblende hindurch auf eine Objektebene einfällt.

Bei Feinstruktur-Untersuchungen ist es wichtig, dass Streulicht vom Präparat fern gehalten wird, da es sonst den Kontrast vermindert und feine Strukturen verwischt. In der Mikroskopie wird das Streulicht ausgeschaltet, wenn lediglich das überschaubare Gesichtsfeld im Präparat beleuchtet wird und der Rest dunkel bleibt. Diese Funktion übernimmt die Leuchtfeldblende. Die Aperturblende hingegen bestimmt wesentlich die Abbildungseigenschaften, die je nach Erfordernissen der unterschiedlichen Präparate in Richtung Kontrast oder Auflösung veränderbar sind. Für die Qualität des mikroskopischen Bildes haben somit beide Blenden eine entscheidende Bedeutung und müssen für die jeweiligen Vergrößerungs- und Objektbedingungen individuell eingestellt werden.

Am Mikroskop ist der Objektivrevolver in der Regel mit einer Vielzahl von Objektiven bestückt. Ihre Auswahl erstreckt sich vom Übersichtsobjektiv bis zu Objektiven höchster Vergrößerung und Auflösung. Damit ist ein schneller Wechsel des Gesichtsfeldes während des Mikroskopierens möglich, es erfordert allerdings auch die jeweilige Anpassung der Beleuchtung. Dies wird durch die Einstellung von Leuchtfeld- und Aperturblende gelöst. Die Anforderungen der Objektive an die Beleuchtung bzgl. auszuleuchtendem Objektfeld und Ausleuchtungswinkel sind jedoch derart unterschiedlich, dass eine Anpassung des geometrischen Flusses innerhalb der Beleuchtung notwendig ist, da Größe und Abstrahlcharakteristik der verwendeten Lichtquellen begrenzt sind. Diese Anpassung des geometrischen Flusses der Beleuchtung wird dadurch realisiert, dass für die einzelnen Vergrößerungsbereiche unterschiedliche Kondensoren in den Strahlengang geschaltet werden.

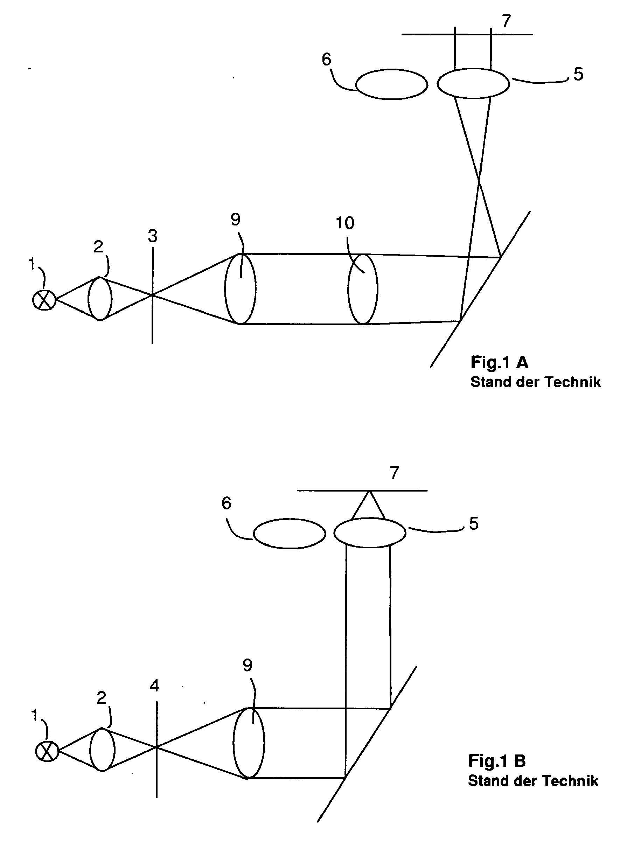

Bei den gängigen Mikroskopdurchlichtbeleuchtungen befinden sich A-pertur- und Leuchtfeldblende im Stativfuß. Wie in Figur 1 (Stand der Technik) dargestellt, gewährleistet diese Art der Beleuchtung, dass die Aperturblende in die Eintrittspupille der Kondensoren abgebildet wird (Fig.1 A) und die Leuchtfeldblende in die Präparatebene (Fig.1 B). Üblicherweise wird in einer solchen Konfiguration die Beleuchtungsquelle in die Aperturblendenebene abgebildet, was als Köhlerbeleuchtung oder Köhlersche Beleuchtung bezeichnet wird.

Um den gesamten Vergrößerungsbereich der Objektive von 1x -100x auszuleuchten, werden im Stand der Technik unterschiedliche Kondensorköpfe oder komplexe Kondensoroptiken mit Doppelklappmechanismen, die in den Strahlengang eingeschwenkt werden (Fig.1) beschrieben. Dabei muß gewährleistet sein, dass beide Blendenabbildungen in der oben beschriebenen Weise funktionieren.

Die US 3 679 287 beschreibt eine Beleuchtungseinrichtung mit mehreren Schaltstellungen und einer entlang einer optischen Achse verschiebbaren Fokussierlinse.

Die US 5684625 offenbart eine Beleuchtungseinrichtung mit zwei Schaltstellungen, dem Standardbereich 10x - 100x und dem Übersichtsbereich 1.6x - 5x. Mit Einschwenken des Übersichtskondensorkopfes wird gleichzeitig mittels komplexer Mechanikkopplung eine Zusatzlinse eingeschwenkt, so dass für den kompletten Vergrößerungsbereich die Köhlerbeleuchtung erhalten bleibt. Eine Erweiterung in Richtung Makrobereich bis 1x Objektive ist technisch nicht möglich.

In der JP 9033820A wird eine Beleuchtungseinrichtung mit drei Schaltstellungen beschrieben, dem Standardbereich 10x - 100x, dem Übersichtsbereich 1.6x - 5x und dem Makrobereich ≥ 1x. Mit dieser Beleuchtungseinrichtung erreicht man die Erweiterung des Vergrößerungsbereiches durch eine zusätzliche optische Kaskade. Damit steigen jedoch der Aufwand und das technische Risiko aufgrund des zusätzlichen Kondensorkopfes, des komplexen Schwenkmechanismus der Drei-Kopf-Schaltung im räumlich sehr limitierten Bereich unterhalb des Objekttisches und der zusätzlichen Reduzierung des Einbauraumes durch die Kondensorscheibe zur Aufnahme von Lichtringen und DIC-Prismen für die Kontrastverfahren. Für Standard- und Übersichtsbereich gilt das Köhlersche Beleuchtungsprinzip, für den Makrobereich die Kritische Beleuchtung.

Das in der EP 0841584 A2 offenbarte optische Beleuchtungsverfahren sieht zwei Schaltstellungen, den Standardbereich 10x - 100x und den Übersichtsbereich 1x - 5x vor. Dieser erweiterte Objektivvergrößerungsbereich kommt mit nur einer einfachen Umschaltung unterhalb des Objekttisches aus. Dabei wird der Standardbereich mit einem Kondensorkopf nach dem Köhlerschen Beleuchtungsprinzip realisiert. Für die schwachen Vergrößerungen wird durch Ausschalten des Kondensorkopfes, gleichzeitig eine tiefer angeordnete Baugruppe eingeschaltet, so dass in Summe ein afokales System entsteht, dass nicht mehr dem Köhlerschen Beleuchtungsprinzip entspricht. In dieser Konfiguration wird die Leuchtfeldblende des Standardbereiches zur Aperturblende des Übersichts- und Makrobereiches. Die Aperturblende des Standard- bereiches übernimmt für die schwachen Objektive jedoch nicht die Funktion der Leuchtfeldblende bzw. kann höchstens in gröbster Näherung das Sehfeld begrenzen und führt bei Schließen der Blende zu inhomogen ausgeleuchteten Objektfeldern. Diese nicht zufrieden stellende Art der Feldbegrenzung stellt den größten Nachteil dieser Art der Beleuchtung dar.

Die Anforderungen an das Kondensorsystem sind hoch, da mit dem gleichen optischen System Größenbereiche für Objektive von 1x - 100x ausgeleuchtet werden sollen. Diese Grenzanforderungen können bisher nur komplexe und aufwendige mehrstufige Kondensorsysteme abdecken, die die oben beschriebenen Nachteile mit sich bringen.

Aufgabe der vorliegenden Erfindung ist es daher, eine einfache Beleuchtungseinrichtung für ein Mikroskop bereitzustellen, die eine optimale Feld- und Pupillenausleuchtung in den Bereichen Standard (10x - 10x), Übersicht (1.6x - 5x) und Makro (1x - 1.6x) gewährleistet.

Die Aufgabe wird erfindungsgemäß durch eine Mikroskop-Beleuchtungseinrichtung mit den Merkmalen des Oberbegriffs dadurch gelöst, dass nur ein Kondensor vorgesehen ist, der nur für den Standard-Vergrößerungsbereich von 10x bis 100x in den Beleuchtungsstrahlengang eingeschaltet ist, und dass zwischen Leuchtfeldblende und Aperturblende eine entlang einer optischen Achse verschiebbare Fokussierlinse vorgesehen ist, die bei ausgeschalteter Kondensorlinse so verschoben ist, dass die Leuchtfeldblende in das Objekt abgebildet wird.

Die Anordnung hat den Vorteil, mit nur einem ein- oder ausschaltbaren Kondensorkopf sehr einfach den kompletten Bereich von 1x - 100x optimal beleuchten zu können.

Ausgehend von der EP 0841584 A2 ergeben sich durch den Verzicht der durchgängigen Köhlerbeleuchtung zusätzliche Frei heitsgrade für eine bessere Anpassung des geometrischen Flusses und damit die Möglichkeit sämtliche Vergrößerungen von 1x - 100x mit einer Schaltstellung zu realisieren. Erfindungsgemäß handelt es sich dabei um einen Kondensorkopf, der nur im Standardbereich eingeschaltet ist. Im Übersichts- und Makrobereich bleibt der Kondensorbereich optikfrei, wobei eine Kollektoroptik, beispielsweise bestehend aus einem ersten und einem zweiten Linsenglied, zusammen mit einer Fokussierlinse für die Durchlichtbeleuchtung die Funktion des Übersichtskondensors für Objektive im Bereich von 1x bis 5x übernimmt. Um den Mangel der unzureichenden Leuchtfeldblende im Übersichtsbereich zu beseitigen dient, innerhalb der Beleuchtungsachse eine erfindungsgemäß angeordnete Fokussierlinse dazu, die Leuchtfeldblende in die Objektebene zu fokussieren.

Diese Fokussiermöglichkeit ist auch dann besonders vorteilhaft, wenn der Standardkondensor gegen Ölkondensoren, Kondensoren mit langen Arbeitsabständen oder spezielle Dunkelfeldkondensoren ausgetauscht wird. In diesen Fällen kann die Abbildung der Aperturblende in die Eintrittspupille des Kondensors optimal angepaßt werden. Damit ist gewährleistet, dass für fast beliebige Kondensoren sowohl Feld- und Pupillenausleuchtung optimal sind.

In der Zeichnung ist der Erfindungsgegenstand schematisch dargestellt und wird anhand der Figuren nachfolgend beschrieben.

Es zeigen:
**Figur 1A****:** eine Prinzipdarstellung des Beleuchtungsstrahlengang einer nach dem Stand der Technik bekannten Mikroskopbeleuchtung mit einer Aperturblenden-Abbildung im Standard-Bereich
**Figur 1B**: eine Prinzipdarstellung des Beleuchtungsstrahlengang einer nach dem Stand der Technik bekannten Mikroskopbeleuchtung mit einer Leuchtfeldblendenabbildung im Standard-Bereich
**Figur 2A****:** eine Prinzipdarstellung des Beleuchtungsstrahlengang der erfindungsgemäßen Mikroskopdurchlichtbeleuchtung mit einer Ape r-turblenden-Abbildung im Standard-Bereich
**Figur 2B**: eine Prinzipdarstellung des Beleuchtungsstrahlengang der erfindungsgemäßen Mikroskopdurchlichtbeleuchtung mit einer Leuchtfeldblendenabbildung im Übersichts- bzw. Makro-Bereich

Figur 1 A zeigt schematisch den Beleuchtungsstrahlengang einer bekannten Mikroskopbeleuchtung im Standardvergrößerungsbereich, bei der das Beleuchtungslicht einer Lichtquelle 1 durch eine Kollektorlinse 2 und eine Aperturblende 3 in die Eintrittspupille eines ersten Kondensors 5 abgebildet wird.
Figur 1 B zeigt schematisch den Beleuchtungsstrahlengang einer aus dem Stand der Technik bekannten Mikroskopbeleuchtung im Standardvergrößerungsbereich, bei der das Beleuchtungslicht einer Lichtquelle 1 durch eine Kollektorlinse 2 und eine Leuchtfeldblende 4 über einen ersten Kondensor 5 in das Objekt 7 abgebildet wird.
Für eine Kondensoroptik mit Einstellung im Makro- oder Standard bereich muß der erste Kondensor 5 aufwendig gegen einen zweiten Kondensor 6 ausgewechselt werden, mit den zuvor beschriebenen Nachteilen.

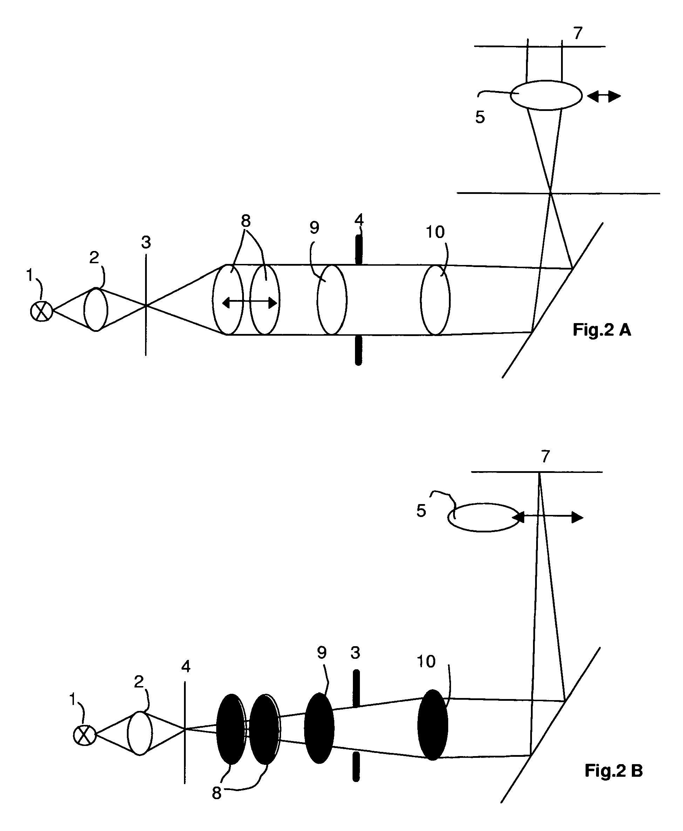

Die erfindungsgemäße Mikroskopdurchlichtbeleuchtung ist in Figur 2 schematisch dargestellt. Figur 2 A zeigt den Beleuchtungsstrahlengang, der vorzugsweise für Standardvergrößerungen (10x - 100x) verwendet wird, wobei das optische System von der Lichtquelle bis zur Oberfläche des Präparates 7 dem Köhlerschen Beleuchtungsprinzip entspricht. Hier wird das Beleuchtungslicht einer Lichtquelle 1 durch eine Kollektorlinse 2 und eine Aperturblende 3 in die Eintrittspupille eines bewegbaren Kondensors 5 abgebildet. Die Bewegung des Kondensors 5 ist mit einem Pfeil kenntlich gemacht.

Figur 2 B zeigt schematisch den Beleuchtungsstrahlengang der vorzugsweise für geringe Vergrößerungensbedingungen (1x - 5x) verwendet wird, wobei das optische System von der Lichtquelle 1 bis zur Oberfläche des Präparates 7 dem Kritischen Beleuchtungsprinzip entspricht, d.h. die Lichtquelle wird in das Objekt 7 abgebildet. Gegenüber der Konfiguration in Figur 2A wird der Kondensor 5 ausgeschwenkt (die Bewegung ist mit Pfeil kenntlich gemacht) und eine Fokussierlinse 8 verschoben (die Bewegung ist mit Pfeil kenntlich gemacht), so dass nun die Leuchtfeldblende 4 in das Objekt 7 abgebildet wird. Der Kondensor 5 wird dabei mechanisch oder elektrisch zur Seite oder nach unten aus dem Strahlengang geschwenkt. Gegenüber Figur 2A sind weiterhin die Funktionen der Blenden vertauscht, die Leuchtfeldblende 4 wird zur Aperturblende 3 und umgekehrt.

Durch Ausschwenken des Kondensors 5 entsteht eine optikfreie Anordnung. In dieser Anordnung entfällt der aufwendige Wechsel von Kondensoroptiken (besonders in automatisierten Mikroskopen), wobei dennoch ein besonders großer Vergrößerungsbereich verwendet werden kann, der von sehr großen Vergrößerungen (Bsp.: 10x - 100x) bis zu geringen Vergrößerungen (Bsp.: 1x - 5x) reicht.
Der Mangel der unzureichenden Leuchtfeldblende im Übersichtsbereich wird dabei durch eine erfindungsgemäße Fokussierlinse 8 behoben, die innerhalb der Beleuchtungsachse dazu dient, die Leuchtfeldblende 4 in die Objektebene 7 zu fokussieren. Die Fokussierlinse 8 ist entlang der optischen Achse beweglich angeordnet, die Steuerung erfolgt mechanisch oder elektrisch über einen Spindelmotor.

### Bezugszeichenliste

- 1: Lichtquelle
- 2: Kollektor
- 3: Aperturblende
- 4: Leuchtfeldblende
- 5: Erster Kondensor
- 6: Zweiter Kondensor
- 7: Präparat/Objekt
- 8: Fokussierlinse
- 9: Erstes Linsenglied
- 10: Zweites Linsenglied

## Patentansprüche

1. Mikroskop-Durchlichtbeleuchtungseinrichtung mit einer entlang einer optischen Achse verschiebbaren Fokussierlinse (8) in einem Beleuchtungsstrahlengang, in dem das Beleuchtungslicht einer Lichtquelle (1) durch eine Kollektorlinse (2), eine Leuchtfeldblende (4) und eine Aperturblende (3) hindurch auf eine Objektebene einfällt,
**dadurch gekennzeichnet,**
a) **dass** nur ein Kondensor (5) vorgesehen ist, der nur für den Standard-Vergrößerungsbereich von 10x bis 100x in den Beleuchtungsstrahlengang eingeschaltet ist,
b) und **dass** zwischen Leuchtfeldblende (4) und Aperturblende (3) die entlang einer optischen Achse verschiebbare Fokussierlinse (8) vorgesehen ist, die bei ausgeschaltetem Kondensor (5) so verschoben ist, dass die Leuchtfeldblende (4) in das Objekt (7) abgebildet wird.

2. Mikroskop-Durchlichtbeleuchtungseinrichtung nach Anspruch 1, **dadurch gekennzeichnet, dass** das Ein- und Ausschalten der Kondensorlinse (5) mechanisch oder mit Hilfe einer Ansteuervorrichtung erfolgt.

3. Mikroskop-Durchlichtbeleuchtungseinrichtung nach einem der Ansprüche 1 oder 2, **dadurch gekennzeichnet, dass** für die Steuerung der Fokussierlinse entlang der optischen Achse ein Spindelmotor vorgesehen ist

4. Mikroskop-Durchlichtbeleuchtungseinrichtung nach einem der Ansprüche 1 bis 3, **dadurch gekennzeichnet,**
- **dass** bei eingeschalteter Kondensorlinse (5) das optische System dem Köhlerschen Beleuchtungssystem entspricht
- und **dass** bei ausgeschaltetem Kondensor (5) die Funktionen der Aperturblende (3) und der Leuchtfeldblende (4) vertauscht sind.

## Claims

1. A microscope transillumination device comprising a focusing lens (8) displaceable along an optical axis in an illumination beam path, in which the illumination light of a light source (1) is incident on an object plane through a collector lens (2), a light field diaphragm (4) and an aperture diaphragm (3),
**characterised in that**
a) there is provided only one condenser (5) which is switched into the illumination beam path only for the standard magnification range of 10x to 100x, and
b) provided between the light field diaphragm (4) and the aperture diaphragm (3) is the focusing lens (8) which is displaceable along a longitudinal axis and which when the condenser (5) is switched out is so displaced that the light field diaphragm (4) is imaged into the object (7).

2. A microscope transillumination device according to claim 1 **characterised in that** the condenser lens is switched in and out mechanically or by means of an actuation device.

3. A microscope transillumination device according to one of claims 1 and 2 **characterised in that** there is provided a spindle motor for control of the focusing lens along the optical axis.

4. A microscope transillumination device according to one of claims 1 to 3 **characterised in that**
- when the condenser lens (5) is switched in the optical system corresponds to the Köhler illumination system, and
- when the condenser (5) is switched out the functions of the aperture diaphragm (3) and the light field diaphragm (4) are interchanged.

## Revendications

1. Installation pour l'éclairage par transmission pour un microscope avec une lentille de focalisation (8) déplaçable le long d'un axe optique dans un trajet de rayons d'éclairage, dans lequel la lumière d'éclairage d'une source de lumière (1) est incidente à travers une lentille collectrice (2), un diaphragme limitant de champ lumineux (4) et un diaphragme d'ouverture (3) sur un plan d'objet,
**caractérisée**
a) **en ce qu'**un seul condenseur (5) est prévu qui est commuté seulement pour la plage de grossissement standard de 10x à 100x dans le trajet de rayons d'éclairage,
b) et **en ce qu'**il est prévu entre le diaphragme limitant de champ lumineux (4) et le diaphragme d'ouverture (3), la lentille de focalisation (8) déplaçable le long d'un axe optique qui, le condenseur (5) étant hors service, est déplacée de telle sorte que le diaphragme limitant de champ lumineux (4) est représenté dans l'objet (7).

2. Installation pour l'éclairage par transmission pour un microscope selon la revendication 1, **caractérisée en ce que** la mise en et hors service de la lentille de condenseur (5) a lieu mécaniquement ou à l'aide d'un dispositif de commande.

3. Installation pour l'éclairage par transmission pour un microscope selon l'une des revendications 1 ou 2, **caractérisée en ce que** pour la commande de la lentille de focalisation le long de l'axe optique, un moteur à broche est prévu.

4. Installation pour l'éclairage par transmission pour un microscope selon l'une des revendications 1 à 3, **caractérisée**
- **en ce que**, la lentille de condenseur (5) étant en service, le système optique correspond au système d'éclairage de Köhler,
- et **en ce que**, le condenseur (5) étant hors service, les fonctions du diaphragme d'ouverture (3) et du diaphragme limitant de champ lumineux (4) sont échangées.
